Europäisches Patentamt

**European Patent Office**

**Office européen des brevets**

(11) Numéro de publication: **0 080 925**
**B1**

# (12) FASCICULE DE BREVET EUROPEEN

(45) Date de publication du fascicule du brevet:
19.03.86

(51) Int. Cl.⁴: **H 02 M 7/155**

(21) Numéro de dépôt: **82402119.0**

(22) Date de dépôt: **22.11.82**

(54) Convertisseur statique à soupapes électriques comprenant un montage dodécaphase à deux ponts de Graetz pour la suppression des harmoniques 5 et 7 du courant réseau.

(30) Priorité: **30.11.81 FR 8122539**

(43) Date de publication de la demande:
**08.06.83 Bulletin 83/23**

(45) Mention de la délivrance du brevet:
**19.03.86 Bulletin 86/12**

(84) Etats contractants désignés:
**BE CH DE GB IT LI NL SE**

(56) Documents cités:
**US - A - 3 832 619**

(73) Titulaire: **MERLIN GERIN, Rue Henri Tarze,
F-38050 Grenoble Cedex (FR)**

(72) Inventeur: **Florina, Jean-Noel, Merlin Gerin Rue Henri
Tarze, F-38050 Grenoble Cedex (FR)**

(74) Mandataire: **Kern, Paul et al, Merlin Gerin Sce.
Brevets 20, rue Henri Tarze, F-38050 Grenoble Cedex
(FR)**

LIBER, STOCKHOLM 1986

## Description

L'invention est relative à un convertisseur statique alternatif/continu à soupapes formé par deux ponts de Graetz triphasés couplés en serie ou en parallèle et alimentés par des tensions alternatives triphasées décalées entre elles de 30° grâce à la presence dans le circuit alternatif d'un transformateur ou d'un auto-transformateur triphasé dont l'enroulement primaire est connecté électriquement aux conducteurs du réseau triphasé R, S, T, et dont l'enroulement secondaire est connecté aux soupapes électriques, l'ensemble étant agencé pour constituer un montage dodécaphasé série ou parallèle.

Selon un dispositif connu décrit dans le brevet USA 3.832.619, le déphasage de 30° entre les tensions d'alimentation des deux ponts est obtenu grâce à un transformateur triphasé a deux enroulements secondaires à couplage étoile-triangle ou triangle-étoile. L'enroulement primaire en triangle ou en étoile est alimenté par le réseau R, S, T triphasé, et le premier pont est connecté à l'un des enroulements secondaires, tandis que le deuxième pont est relié électriquement à l'autre enroulement secondaire. L'encombrement d'un tel transformateur du dispositif dodécaphasé est important car il doit être dimensionné pour la puissance totale délivrée par le convertisseur.

L'invention a pour but de pallier cet inconvénient et de permettre la réalisation d'un convertisseur perfectionné à rendement amélioré et à encombrement réduit du transformateur associé.

Le convertisseur selon l'invention est caractérisé en ce que le transformateur ou l'auto-transformateur triphasé a un rapport de transformation voisin ou égal à 1 et que l'un des ponts du montage dodécaphasé est branché à l'enroulement secondaire du transformateur ou de l'auto-transformateur, tandis que l'autre pont est relié aux phases correspondantes de l'enroulement primaire, le mode de connexion desdits enroulements ayant un indice horaire de couplage de valeur prédéterminée susceptible d'engendrer le déphasage de 30° entre les tensions d'alimentation des deux ponts. La valeur de l'indice horaire de couplage est fixée à 5 entrainant un déphasage de 150° entre les tensions primaire et secondaire de chaque phase du transformateur ou de l'autotransformateur.

Selon un premier mode de réalisation de l'invention, on utilise un transformateur triphasé comportant au choix un couplage triangle-étoile ou étoile-triangle de symboles respectifs Dy5 et Yd5. Le transformateur est dimensionné pour la moitié de la puissance délivrée par les deux ponts du convertisseur.

Selon un deuxième mode de réalisation de l'invention, le déphasage de 30° entre les tensions d'alimentation des deux ponts est assuré par un auto-transformateur triphasé à couplage étoile-zigzag et d'indice horaire 5. Il est dimensionné pour le tiers de la valeur de la puissance de sortie du convertisseur. Le couplage en parallèle des deux ponts redresseurs s'effectue par l'intermédiaire de deux bobines d'absorption.

D'autres avantages et caractéristiques ressortiront plus clairement de l'exposé qui va suivre de plusieurs montages selon l'invention, donnés à titre d'exemples non limitatifs et représentés aux dessins annexés, dans lesquels:

la figure 1 montre une vue schématique d'un convertisseur statique selon l'invention, à montage dodécaphasé parallèle de deux ponts de Graetz associés à un transformateur triphasé;

la figure 2 représente une variante de la fig. 1, illustrant un montage dodécaphasé série;

les figures 3 et 4 montrent les diagrammes vectoriels des tensions primaire et secondaire de deux modes de couplage du transformateur utilisé dans les dispositifs des figures 1 ou 2;

la figure 5 est une variante du dispositif de la fig.1 utilisant un auto-transformateur;

les figures 6 et 7 montrent respectivement le mode de connexion et le diagramme vectoriel des tensions de l'auto-transformateur du dispositif de la fig.5.

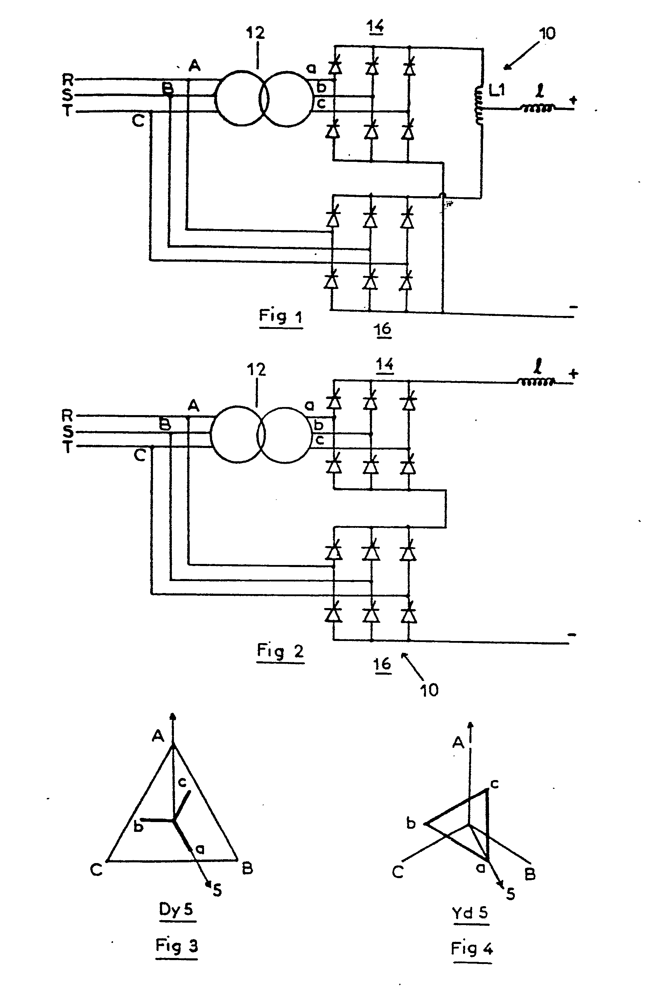

Sur la figure 1, un convertisseur statique alternatif/continu 10 est connecté à un réseau alternatif triphasé R, S, T par l'intermédiaire d'un transformateur 12. Le convertisseur 10 est constitué par un couplage parallèle de deux ponts redresseurs 14, 16 triphasés à soupapes électriques, notamment à thyristors ou à diodes alimentés par des tensions alternatives triphasées décalées entre elles de 30°. L'un 14 des ponts de Graetz est connecté côté alternatif aux bornes a, b, c de l'enroulement secondaire du transformateur 12 triphasé de rapport de transformation sensiblement égal à 1 et dont l'enroulement primaire est alimenté par les conducteurs R, S, T du réseau. L'autre pont de Graetz 16 est branché directement aux phases correspondantes du réseau et aux bornes A, B, C de l'enroulement primaire du transformateur 12. Le couplage étoile-triangle ou triangle-étoile des enroulements primaire et secondaire du transformateur 12 triphasé posséde un indice horaire de 5 pour assurer le déphasage de 30° des tensions d'alimentation des deux ponts 14, 16. La mise en parallèle des deux ponts 14, 16 s'effectue au moyen d'une bobine d'absorption $L_1$ à point milieu connectée au pôle positif du convertisseur par l'intermédiaire d'une bobine de filtrage 1. L'ensemble forme un montage dodécaphasé parallèle.

La figure 2 montre une variante de la figure 1, illustrant un dispositif dodécaphasé série obtenu par un couplage série de deux ponts 14, 16 de Graetz triphasés alimentés par des tensions décalées de 30° grâce au transformateur 12 ayant un mode de couplage prédéterminé. L'enroulement secondaire unique de ce dernier est raccordé au pont 14, tandis que l'autre pont 16 est relié aux bornes A, B, C de l'enroulement primaire. La valeur de la tension redressée est dans ce cas double de celle du dispositif de la fig. 1. Il n'y a pas de bobine d'absorption dans le circuit continu mais uniquement une bobine de filtrage 1.

Les figures 3 et 4 illustrent les diagrammes vectoriels des tensions primaire et secondaire du transformateur 12 triphasé à deux modes de connexion, soit en triangle-étoile (fig. 3), soit en étoile-triangle (fig. 4). Dans les deux cas l'indice horaire de couplage du transformateur 12 est fixé à 5 et détermine le déphasage de 150° entre les tensions des enroulements primaire et secondaire. Les couplages respectifs sont représentés par les symboles Dy5 et Yd5.

Les dispositifs dodécaphasés parallèle et série des fig. 1 et 2, à deux ponts de Graetz 14, 16 permettent l'élimination des harmoniques 5 et 7 du courant du réseau R, S, T. Le transformateur 12 triphasé à couplage Dy5 ou Yd5 est dimensionné pour la moitié de la puissance P délivrée par les deux ponts 14, 16.

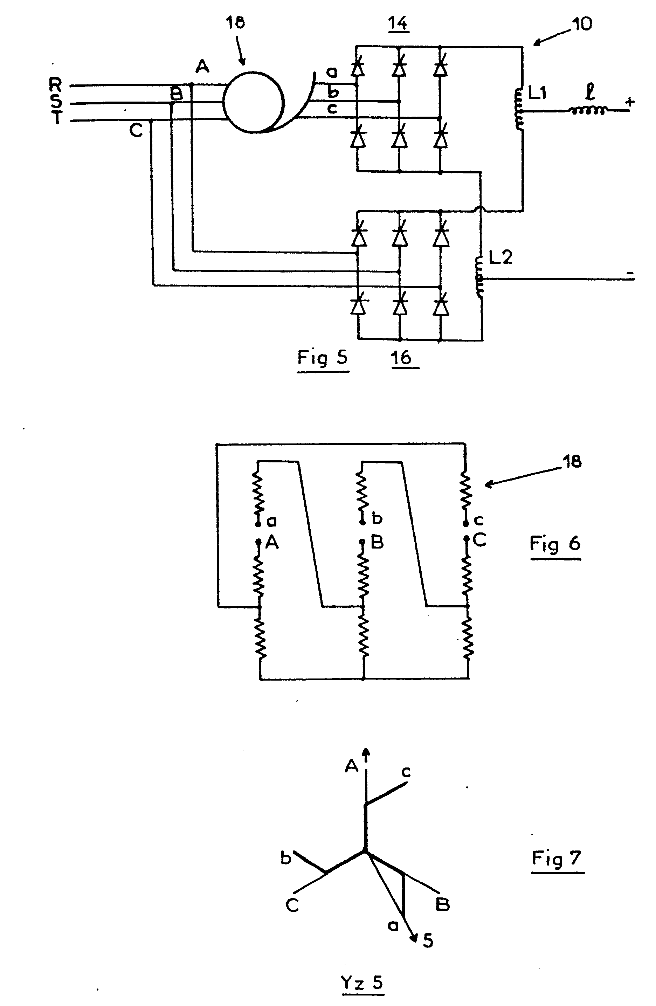

La figure 5 représente un autre montage dodécaphasé parallèle à deux ponts de Graetz 14, 16 triphasés, dans lequel un auto-transformateur 18 triphasé réalise le déphasage de 30° entre les tensions alternatives d'alimentation des deux ponts 14, 16. Le pont 14 est connecté aux bornes a, b, c de l'enroulement secondaire, et l'autre pont 16 est relié aux bornes A, B, C de l'enroulement primaire.

Le schéma électrique de couplage de l'auto-transformateur 18 est illustré à la figure 6 et est du type étoile-zigzag d'indice horaire 5. Le diagramme vectoriel des tensions est représenté à la figure 7, et le symbole du couplage est Yz5 autorisant un déphasage de 150° entre les tensions primaire et secondaire d'une même phase de l'auto-transformateur 18.

Le couplage en parallèle des deux ponts 14, 16 redresseurs s'effectue sur le circuit continu par l'intermédiaire de deux bobines d'absorption $L_1$, $L_2$ indispensables au bon fonctionnement du convertisseur 10 à cause de l'absence d'isolement galvanique entre les deux ponts 14, 16. L'une $L_1$ des bobines associée au pôle positif est connectée par ses extrémités opposées aux cathodes des trois thyristors supérieurs de chaque pont 14, 16, tandis que l'autre bobine $L_2$ est reliée aux anodes des trois thyristors inférieurs de chaque pont 14, 16. La tension redressée du circuit continu est prise aux points milieux des bobines d'absorption $L_1$, $L_2$ à travers une bobine 1 auxiliaire de filtrage.

Le dispositif de la fig. 5 permet également l'élimination des harmoniques 5 et 7 du courant réseau et l'auto-transformateur 18 triphasé est dimensionné pour le tiers de la puissance délivrée par les deux ponts 14, 16.

## Revendications

1. Convertisseur statique (10) alternatif/continu à soupapes électriques, notamment à thyristors ou à diodes, formé par deux ponts de Graetz (14, 16) triphasés couplés en série ou en parallèle et alimentés par des tensions alternatives triphasées décalées entre elles de 30° grâce à la présence dans le circuit alternatif d'un transformateur (12) ou d'un auto-transformateur (18) triphasé dont l'enroulement primaire est connecté électriquement aux conducteurs du réseau triphasé R, S, T, et dont l'enroulement secondaire est connecté aux soupapes électriques, l'ensemble étant agencé pour constituer un montage dodécaphasé série ou parallèle, caractérisé en ce que le transformateur (12) ou l'auto-transformateur (18) triphasé a un rapport de transformation voisin ou égal à 1, et que l'un (14) des ponts du montage dodécaphasé est branché à l'enroulement secondaire du transformateur (12) ou de l'auto-transformateur (18), tandis que l'autre pont (16) est relié aux phases correspondantes de l'enroulement primaire, le mode de connexion desdits enroulements ayant un indice horaire de couplage de valeur prédéterminée susceptible d'engendrer le déphasage de 30° entre les tensions d'alimentation des deux ponts (14, 16).

2. Convertisseur statique (10) selon la revendication 1, caractérisé en ce que la valeur de l'indice horaire de couplage est fixée à 5 entraînant un déphasage de 150° entre les tensions primaire et secondaire de chaque phase du transformateur (12) ou de l'auto-transformateur (18).

3. Convertisseur statique (10) selon la revendication 2, caractérisé en ce que le transformateur (12) triphasé comporte un couplage triangle-étoile ou étoile-triangle de symboles respectifs Dy5 et Yd5.

4. Convertisseur statique (10) selon la revendication 2, caractérisé en ce que l'auto-transformateur (18) triphasé possède un couplage étoile-zigzag de symbole Yz5.

5. Convertisseur statique (10) selon la revendication 4, caractérisé en ce que le couplage en parallèle des deux ponts (14, 16) redresseurs s'effectue sur le circuit continu par l'intermédiaire de deux bobines d'absorption $L_1$, $L_2$ associées respectivement aux pôles positif et négatif du convertisseur, l'une $L_1$ des bobines étant connectée par ses extrémités opposées aux cathodes de trois soupapes de chaque pont (14, 16) triphasé, l'autre bobine $L_2$ étant reliée aux anodes des trois autres soupapes de chaque pont.

6. Convertisseur statique (10) selon la revendication 3, caractérisé par le fait que le transformateur (12) triphasé est dimensionné pour la moitié de la valeur de la puissance délivrée par les deux ponts (14, 16) du convertisseur.

7. Convertisseur statique (10) selon la revendication 4 ou 5, caractérisé par le fait que l'auto-transformateur (18) triphasé est dimensionné pour le tiers de la valeur de la puissance délivrée par le convertisseur.

8. Convertisseur statique (10) selon la revendication 3 pour un montage dodécaphasé parallèle, caractérisé par le fait qu'une bobine d'absorption $L_1$ est agencée entre les deux ponts (14, 16) dans le circuit continu du convertisseur (10).

**Patentansprüche**

1. Statischer Wechsel/Gleichrichterumformer (10) mit elektrischen Ventilen, insbesondere mit Thyristoren oder Dioden, der von zwei in Serie oder parallel geschalteten dreiphasigen Graetzbrücken (14, 16) gebildet wird, die von dreiphasigen miteinander um 30° versetzten Wechselspannungen gespeist werden dank des Vorhandenseins im Wechselstromkreis eines dreiphasigen Transformators (12) oder Spar-Transformators (18), dessen Primärwicklung elektrisch mit den Leitern des dreiphasigen Netzes R, S, T verbunden ist, und dessen Sekundärwicklung mit den elektrischen Ventilen verbunden ist, wobei das Ganze so ausgeführt ist, um eine zwölfphasige Serien- oder Parallelschaltung zu bilden, dadurch gekennzeichnet, dass der dreiphasige Transformator (12) oder Spar-Transformator (18) ein Übersetzungsverhältnis von nahe oder gleich 1 hat, und dass eine (14) der Brücken der zwölfphasigen Schaltung an der Sekundärwicklung des Transformators (12) oder des Spar-Transformators (18) angeschlossen ist, während die andere Brücke (16) mit den entsprechenden Phasen der Primärwicklung verbunden ist, wobei die Verbindungsweise der genannten Wicklungen einen Schaltungs-Stundenkoeffizient aufweist, der von vorbestimmten Wert ist und eine Phasenverschiebung von 30° zwischen den Speisespannungen der beiden Brücken (14, 16) bewirken kann.

2. Statischer Umformer (10) gemäss Anspruch 1, dadurch gekennzeichnet, dass der Wert des Schaltungs-Stundenkoeffizienten auf 5 festgelegt ist, was eine Phasenverschiebung von 150° zwischen der Primär- und der Sekundärspannung jeder Phase des Transformators (12) oder des Spar-Transformators (18) bewirkt.

3. Statischer Umformer (10) gemäss Anspruch 2, dadurch gekennzeichnet, dass der dreiphasige Transformator (12) eine Dreieck-Stern- oder eine Stern-Dreieck-Schaltung aufweist, mit den entsprechenden Symbolen Dy5 oder Yd5.

4. Statischer Umformer (10) gemäss Anspruch 2, dadurch gekennzeichnet, dass der dreiphasige Spar-Transformator (18) eine Stern-Zickzack-Schaltung mit dem Symbol Yz5 besitzt.

5. Statischer Umformer (10) gemäss Anspruch 4, dadurch gekennzeichnet, dass die Parallel-Schaltung der beiden Gleichrichter-Brücken (14, 16) auf dem Gleichstromkreis ausgeführt wird mit Hilfe von zwei Absorptions-Spulen ($L_1$, $L_2$), die jeweils dem positiven und dem negativen Pol des Umformers zugeordnet sind, wobei eine ($L_1$) der Spulen durch ihre entgegengesetzte Enden mit den Kathoden der drei Ventile jeder dreiphasigen Brücke (14, 16) verbunden ist, während die andere Spule ($L_2$) mit den Anoden der drei anderen Ventile jeder Brücke verbunden sind.

6. Statischer Umformer (10) gemäss Anspruch 3, dadurch gekennzeichnet, dass der dreiphasige Transformator (12) für die Hälfte des Wertes der von den zwei Brücken (14, 16) des Umformers abgegebenan Leistung bemessen ist.

7. Statischer Umformer (10) gemäss Anspruch 4 oder 5, dadurch gekennzeichnet, dass der dreiphasige Spar-Transformator (18) für ein Drittel des Wertes der von dem Umformer abgegebenen Leistung bemessen ist.

8. Statischer Umformer (10) gemäss Anspruch 3, für eine parallele zwölfphasige Schaltung, dadurch gekennzeichnet, dass eine Absorptionsspule ($L_1$) zwischen den beiden Brücken (14, 16) in dem Gleichstromkreis des Umformers (10) angeordnet ist.

**Claims**

1. Alternating/direct static converter (10) with electric valves, in particular with thyristors or with diodes, formed by two triple-phase Graetz bridges (14, 16) series or parallel connected and supplied by triple-phase alternating voltages phase shifted by 30° owing to the presence in the alternating circuit of a triple-phase transformer (12) or auto-transformer (18), the primary winding of which is electrically connected to the conductors of the tripie-phase network R, S, T, and the secondary winding of which is connected to the electric valves, the assembly being disposed to constitute a series or parallel twelve-phase connection, characterized in that the triple-phase transformer (12) or auto-transformer (18) has a transformation ratio close or equal to 1, and that one (14) of the bridges of the twelve-phase connection is branched to the secondary winding of the triple-phase transformer (12) or auto-transformer (18), whereas the other bridge (16) is connected to the corresponding phases of the primary winding, the connection type of said windings having a clock hour figure of the vector group of predetermined value capable of generating the 30° phase shift between the supply voltages of the two bridges (14, 16).

2. Static converter (10) according to claim 1 characterized in that the value of the clock hour figure of the vector group is settled at 5 involving a 150° phase shift between the primary and secondary voltages of each phase of the transformer (12) or auto-transformer (18).

3. Static converter (10) according to claim 2, characterized in that the triple-phase transformer (12) comprises a delta-star or star-delta connection of respective symbols Dy5 and Yd5.

4. Static converter (10) according to claim 2, characterized in that the triple-phase autotransformer (18) has a star-zigzag connection of symbol Yz5.

5. Static converter (10) according to claim 4, characterized in that the parallel connection of the two rectifier bridges (14, 16) is accomplished on the direct circuit through two absorption coils, $L_1$, $L_2$ associated respectively with the positive and negative poles of the converter, one $L_1$ of the coils being connected to the cathodes of three valves of each triple-phase bridge (14, 16) by its opposite ends, the other coil $L_2$ being connected to the anodes of the three other valves of each bridge.

6. Static converter (10) according to claim 3, characterized in that the triple-phase transformer (12) is sized up for half of the value of the power delivered by the two bridges (14, 16) of the converter.

7. Static converter (10) according to claim 4 or 5, characterized in that the triple-phase auto-transformer (18) is sized up for third of the value of the power delivered by the converter.

8. Static converter (10) according to claim 3 for a parallel twelve-phase connection, characterized in that an absorption coil $L_1$ is disposed between the two bridges (14, 16) in the direct circuit of the converter (10).

0 080 925

**12**   **14**   **10**

L1   ⅼ   +

**Fig 1**

**16**

−

**12**   **14**   ⅼ   +

**16**

**10**

**Fig 2**

A

c

b

a

C   B   S

**Dy 5**

**Fig 3**

A

c

b

C   a   B

S

**Yd 5**

**Fig 4**

**0 080 925**

Fig 5   16

Fig 6

Fig 7

Yz 5

3